# EUROPÄISCHE PATENTSCHRIFT

(11) **EP 1 730 614 B1**
(45) Veröffentlichungstag und Bekanntmachung des Hinweises auf die Patenterteilung: **23.12.2009**
(21) Anmeldenummer: 05729699.8
(22) Anmeldetag: 09.03.2005
(51) Int. Cl.: G05B 19/418

(54) **STÖRMELDESYSTEM UND VERFAHREN ZUR ÜBERTRAGUNG VON STÖRMELDUNGEN**
FAULT MESSAGE SYSTEM AND METHOD FOR TRANSMITTING FAULT MESSAGES
SYSTEME DE SIGNALISATION D'ANOMALIES ET PROCEDE DE TRANSMISSION DE MESSAGES D'ANOMALIES

(30) Priorität: 31.03.2004 DE 102004015888
(43) Veröffentlichungstag der Anmeldung: 13.12.2006
(73) Patentinhaber: Continental Automotive GmbH, 30165 Hannover (DE)
(72) Erfinder: PFEFFER, Claus-Markus, 36132 Eiterfeld (DE)
(86) Internationale Anmeldenummer: PCT/EP2005/051035
(87) Internationale Veröffentlichungsnummer: WO 2005/096112

(56) Entgegenhaltungen:
- EP-A- 0 880 119
- EP-A- 1 128 244
- NL-C2- 1 009 347
- US-A1- 2002 023 075

## Beschreibung

Gegenstand der Erfindung ist ein Störmeldesystem und Verfahren zur Übertragung von Störmeldungen mit mehreren räumlich verteilt angeordneten Produktionseinheiten, die Mittel zum Generieren und Anzeigen eines Störsignals besitzen, einer Störmeldebox, die zum Empfang von Störsignalen und zur Weitersendung von Störmeldungen ausgebildet ist und einem oder mehreren Empfangsgeräten zum Empfangen und Anzeigen von Störmeldungen, wobei mehrere Produktionseinheiten zu mindestens einer Gruppe angeordnet sind, dass jeder Produktionseinheit eine Sendeeinheit zur drahtlosen Übermittlung der Störsignale zugeordnet ist, und dass die Datenempfangseinheiten mit der Störmeldebox verbunden sind, und dass die Störmeldebox mit einem Prozessrechner verbunden ist.

Es ist eine Schaltungsanordnung zur Übermittlung von Alarmierungs- und Prozessdaten bekannt, bei der Daten einer Anlage von einer Steuerung über ein Bus-System einer einzelnen Alarmsteuerung zugeführt und von dort über ein Modem in das Netz eines Netzbetreibers eingespeist werden. Anschließend werden die Daten an das Mobiltelefon einer autorisierten Person übertragen (DE 196 54 859 C1). Das Vorsehen einer Alarmsteuerung mit einem Datenspeicher, einem Programmspeicher und einem Sprachsynthesizer, sowie einem angeschlossenen Display und einer Tastatur an jeder Anlage ist insbesondere bei mehreren räumlich verteilt angeordneten Anlagen sehr aufwendig. Zudem lassen sich alle Daten nur über ein separat anzuschließendes Modem einem Netzbetreiber zuführen, über den die Daten dann wieder an die entsprechenden Zielorte geleitet werden.

Aus der EP 1 128 244 A2 ist ein computerbasiertes Netzwerk für Werkzeugsmaschinen bekannt, mit dem Pressen in ein Computernetzwerk eingebunden werden. Das Netzwerk verfügt dazu über Access Points, welche den Zugang zum Netzwerk ermöglichen. Gruppen von Werkzeugsmaschinen können hierbei mit mehreren Access Points in Verbindung treten.

Es ist weiterhin ein Fernüberwachungssystem bekannt (EP 0 880 119 A2), bei dem jede einzelne von mehreren Überwachungsstellen zur Erzeugung von den Momentanzustand entsprechenden oder Zustandsänderungen kennzeichnenden Signalen an eine zentrale Steuer- und Wähleinheit, die die Signale verwaltet und ihrerseits über ein Fernübertragungsnetz mit Empfängern verbindet, sendet.

Aufgabe der Erfindung ist es, ein einfach aufgebautes und leicht zu installierendes Störmeldesystem zu schaffen, welches flexibel an unterschiedliche Produktionseinheiten anpassbar ist und insbesondere bei räumlich verteilt angeordneten Produktionseinheiten eine verbesserte Darstellung von Störmeldungen erlaubt. Weiter ist es Aufgabe der Erfindung, ein Verfahren zum Betreiben eines derartigen Störmeldesystems zu schaffen.

Erfindungsgemäß wird die erste Aufgabe mit einem Störmeldesystem nach Anspruch 1 gelöst.

Die Zuordnung einer Sendeeinheit zu jeder Produktionseinheit zur Übermittlung der Störsignale an eine Datenempfangseinheit erlaubt eine einfache Integration von Produktionseinheiten in das Störmeldesystem. Besonders deutlich wird dieser Vorteil bei der nachträglichen Erweiterung des Störmeldesystems um weitere Produktionseinheiten.

Durch die Zusammenfassung der Produktionseinheiten zu Gruppen lassen sich Produktionseinheiten nach technologischen Gesichtspunkten erfassen. So ist vorteilhaft, die Produktionseinheiten einzelner Fertigungslinien zu jeweils einer Gruppe zusammenzufassen. Durch die Zuordnung einer Datenempfangseinheit zu jeder Gruppe lassen sich so auf besonders schnelle Weise Störungen den einzelnen Gruppen zuordnen.

Erfindungsgemäß besitzen die Datenempfangseinheiten Mittel, vorzugsweise Lampen, zum Anzeigen der Störsignale. Auf Grund der räumlich getrennten Anordnung der Produktionseinheiten dient eine derartige Anzeige an der Datenempfangseinheit dem Erfassen der aktuellen Situation, insbesondere der Schnellen Lokalisierung der Störung.

Die Verbindung der Störmeldebox mit einem Prozessrechner erlaubt darüber hinaus die Weiterleitung der Störmeldungen zur Dokumentation und Auswertung, wobei dies vollkommen unabhängig von der Weitersendung der Störmeldung durch die Störmeldebox an das Empfangsgerät, zum Beispiel das Mobiltelefon eines für die Produktionseinheiten Verantwortlichen ist.

Für die räumliche Trennung des Prozessrechners von den Produktionseinheiten hat es sich als vorteilhaft herausgestellt, die Störmeldebox über eine Netzwerkverbindung mit dem Prozessrechner zu verbinden, so dass der Standort des Prozessrechners innerhalb des Netzwerkes frei wählbar ist. Als besonders günstig hat sich die Ausbildung der Netzwerkverbindung als LAN-Verbindung erwiesen.

Für eine weitergehende Produktionsplanung und Produktionssteuerung ist es von Vorteil, den Prozessrechner über ein weiteres Netzwerk mit weiteren Rechnern zu verbinden.

Zur optimalen Anpassung des Störmeldesystems an die jeweiligen Belange hat es sich eine Bearbeitung der Störsignale in der Störmeldebox als vorteilhaft herausgestellt. Die Störmeldebox besitzt zu diesem Zweck eine Datenaufbereitungseinheit. Auf diese Weise lässt sich genau definieren, wann eine Störmeldung von der Störmeldebox weitergegeben wird.

Die zweite Aufgabe der Erfindung wird gemäß Anspruch 6 gelöst.

Der Vorteil dieses Verfahrens besteht darin, dass mit der Übertragung der Störsignale einer Gruppe von Produktionseinheiten an jeweils eine Datenempfangseinheit die Störungen besonders einfach der jeweiligen Gruppe zuordenbar sind.

Erfindungsgemäß lässt sich die Zuordnung der Störung zu den einzelnen Gruppen, bzw. das Sichtbarmachen der von der Störung betroffenen Gruppe verbessern, wenn die Störsignale an den einzelnen Datenempfangseinheiten visualisiert werden, vorzugsweise mit Lampen. Insbesondere wenn mehrere Produktionseinheiten zu mehreren Gruppen, zum Beispiel Fertigungslinien, zusammen gefasst sind, wird so die Lokalisierung der Störung durch den Verantwortlichen wesentlich vereinfacht.

Des Weiteren ist es von Vorteil, die Störsignale vor der Umwandlung in Störmeldungen aufzubereiten. Damit kann genau festgelegt werden, wann eine Störmeldung vorliegt. In Verbindung mit der Weiterleitung der Störmeldungen von der Störmeldebox zu dem Prozessrechner lassen sich damit nur tatsächliche Störmeldungen erfassen und für weitere Dokumentationen, Analysen und Steuerungen bereitstellen, ohne dass zusätzliche Bearbeitungen der Störmeldungen notwendig sind.

Sofern an einer Produktionseinheit auf Grund einer Störmeldung die notwendigen Maßnahmen zum Beheben der Störung ergriffen werden, kann es im Verlauf dieser Maßnahmen, zum Beispiel beim Testbetrieb, zum erneuten Generieren und Weiterleiten von Störsignalen an die Störmeldebox kommen. Um derartige Störsignale nicht als Störmeldungen zu erfassen, werden in einer vorteilhaften Ausgestaltung die Störsignale nur dann in eine Störmeldung umgewandelt, wenn sie einem vorbestimmten Zeitraum in der Störmeldebox anliegen. Damit wird vermieden, dass der Verantwortliche für die Produktionseinheit unnötige Störmeldungen auf seinem Empfangsgerät angezeigt bekommt, da er bereits an der Beseitigung der Störung arbeitet. Ebenso wenig werden derartige Störsignale an den Prozessrechner weitergeleitet, so dass die erfassten Störmeldungen die tatsächlichen Störungen widerspiegeln.

Die Umsetzung des vorbestimmten Zeitraumes in der Störmeldebox lässt sich besonders einfach dadurch erreichen, dass mit dem Anliegen des Störsignals ein ansteigendes Signal generiert wird, und erst bei Erreichen eines Schwellwertes eine Störmeldung erzeugt wird. Über die Höhe des Schwellwertes und den Anstieg des Signals lässt sich der Zeitraum beliebig einstellen.

Während der Beseitigung einer Störung an einer Produktionseinheit kommt es oftmals vor, dass in relativ kurzen Abständen Störsignale generiert und an die Störmeldebox weitergeleitet werden, wobei die Störsignale auch mit einem entsprechenden Signalpegel anliegen, so dass sie in eine Störmeldung umgewandelt werden können. Derartige Störmeldungen lassen sich gemäß einer weiteren Ausgestaltung dadurch vermeiden, dass ein auf eine Störmeldung folgendes Störsignal erst dann wieder von der Störmeldebox erfasst wird, wenn das vorherige Störsignal einen vorbestimmten Zeitraum abgeklungen ist.

Des Weiteren hat es sich als vorteilhaft herausgestellt, die von der Störmeldebox übermittelten Störmeldungen in unterschiedlichen Zeitabständen an dem Prozessrechner und das Empfangsgerät des Verantwortlichen weiterzuleiten. So wird für eine genaue Protokollierung bereits nach 5 Sekunden die Störmeldung von der Störmeldebox an den Prozessrechner weitergeleitet, während eine Übermittlung an das Empfangsgerät des Verantwortlichen beispielsweise erst nach 1 Minute erfolgt.

An einem Ausführungsbeispiel wird die Erfindung näher erläutert. Es zeigen:
- Figur 1:: ein Blockschaltbild des erfindungsgemäßen Störmeldesystems,
- Figur 2:: die Signalverläufe einer Produktionseinheit und der Störmeldebox,
- Figur 3:: einen zweiten Signalverlauf einer Produktionseinheit und der Störmeldebox.

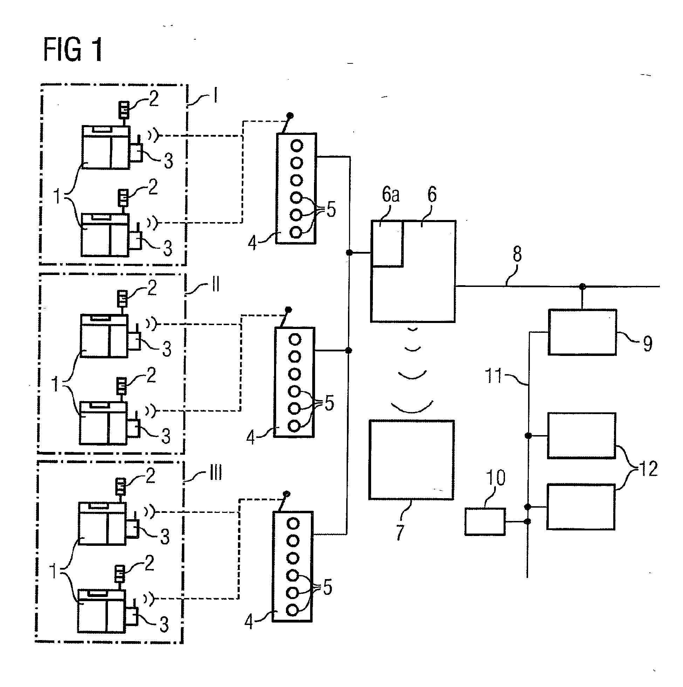

Das in Figur 1 dargestellte Störmeldesystem besteht aus mehreren Produktionseinheiten 1, die als Fertigungslinien mehrere Gruppen I-III bilden. Die Produktionseinheiten besitzen Mittel 2 zum Anzeigen von Störsignalen. Jeder Produktionseinheit 1 ist eine Sendeeinheit 3 zugeordnet, welche das jeweilige Störsignal drahtlos an eine der jeweiligen Gruppe I-III zugeordnete Datenempfangseinheit 4 sendet. Die Datenempfangseinheiten 4 verfügen über entsprechende Lampen 5, um die Störsignale visuell darzustellen. Anschließend werden die Störsignale von den Datenempfangseinheiten 4 an die Störmeldbox 6 weitergeleitet. Wenn aus dem Störsignal, wie nachfolgend beschrieben, in einer Datenaufbereitungseinheit 6a der Störmeldebox 6 eine Störmeldung generiert wurde, wird diese in Form einer SMS an das Mobilfunktelefon 7 eines für die Produktionseinheiten 1 Verantwortlichen, insbesondere eines Technikers, weitergeleitet, der daraufhin entsprechende Maßnahmen einleiten kann.

Gleichzeitig wird die Störmeldung von der Störmeldebox 6 über ein als LAN ausgebildetes Netzwerk 8 an den Prozessrechner 9 weitergeleitet. Dort wird die Störmeldung mit Initialisierungsdaten und/oder Protokolldaten versehen, um sie auswertbar in einer Datenbank abzulegen. Diese Datenbank kann auf einem Prozessrechner 9 oder einem separaten Datenspeicher 10 liegen, mit dem der Prozessrechner 9 über ein weiteres Netzwerk 11 verbunden ist. In dem Netzwerk 11 sind weitere Rechner 12 eingebunden, die diese Daten vom Datenspeicher 10 oder dem Prozessrechner 9 abrufen können.

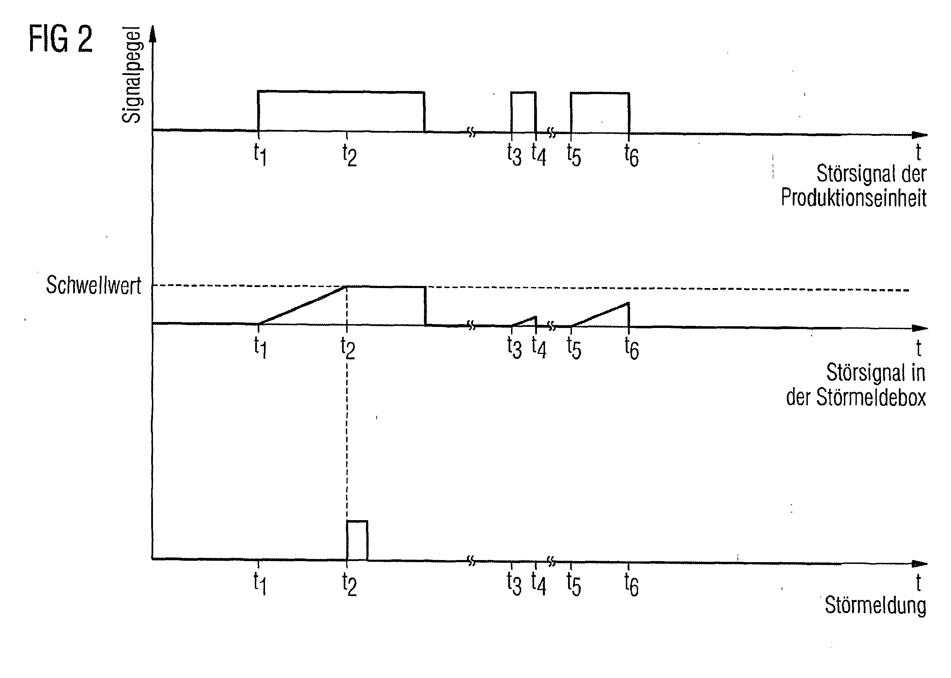

Figur 2 zeigt in dem oberen Diagramm die von einer Produktionseinheit generierten Störsignale. Das mittlere Diagramm zeigt die Signalaufbereitung des von der Produktionseinheit 1 übermittelten Störsignals in der Datenaufbereitungseinheit 6a der Störmeldebox 6, während das untere Diagramm die von der Störmeldebox 6 erzeugten Störmeldungen anzeigt. Das obere Diagramm zeigt zum Zeitpunkt t1 eine auftretende Störung, infolgedessen ein Störsignal von der Produktionseinheit 1 generiert wird. Dieses an die Störmeldebox 6 gesendete Störsignal wird in dieser als Störsignal mit steigendem Pegel aufbereitet. Zum Zeitpunkt t2 erreicht das Störsignal einen Schwellwert, ab dem das Störsignal gemäß des unteren Diagramms in eine Störmeldung umgewandelt wird.

Zu den Zeitpunkten t3 und t5 an der Produktionseinheit 1 auftretende Störungen führen zur Generierung von Störsignalen. Deren zeitliche Länge bis zu dem Zeitpunkt t4 bzw. t6 ist nicht ausreichend, um den Schwellwert zu erreichen, so dass diese Störsignale nicht in entsprechende Störmeldungen umgewandelt werden. Derart kurze Störsignale sind typisch bei Reparaturen oder Wartungen mit damit verbundenen Testläufen und stellen somit keine echten Störungen dar.

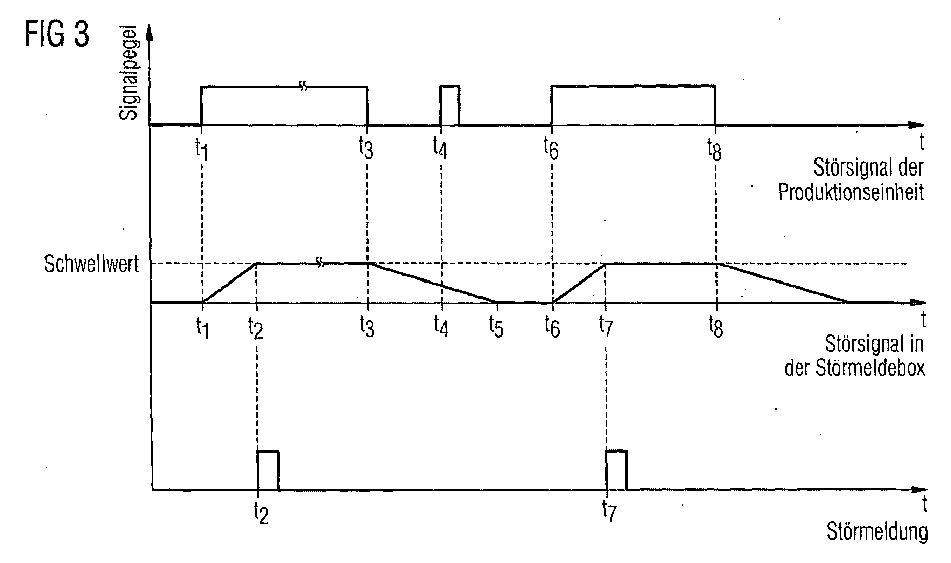

Die in Figur 3 dargestellten Diagramme zeigen Signalverläufe in Abhängigkeit von vorhergegangenen Ereignissen. Das obere Diagramm zeigt wiederum die von einer Produktionseinheit 1 generierten Störsignale. Das mittlere Diagramm zeigt die Signalaufbereitung des von der Produktionseinheit 1 übermittelten Störsignals in der Störmeldebox 6, während das untere Diagramm die erzeugten Störmeldungen anzeigt.

Eine zum Zeitpunkt t1 an der Produktionseinheit 1 auftretende Störung erzeugt ein Störsignal. Dieses an die Störmeldebox 6 gesendete Störsignal wird in dieser als Störsignal mit steigendem Pegel aufbereitet. Zum Zeitpunkt t2 erreicht das Störsignal einen Schwellwert, ab dem das Störsignal gemäß des unteren Diagramms in eine Störmeldung umgewandelt wird. Zum Zeitpunkt t3 liegt das Störsignal an der Produktionseinheit 1 nicht mehr an. Das Störsignal in der Störmeldebox 6 wird daraufhin über einen definierten Zeitraum bis t5 vom Schwellwert auf 0 zurückgeführt. Während dieser Zeit eingehende Störsignale (t4) werden in der Störmeldebox 6 nicht erfasst. Auf diese Weise lassen sich zeitlich kurz aufeinander folgende Störsignale der Produktionseinheit 1, die auf einen Probebetrieb hindeuten, herausfiltern, so dass nur wirkliche Störungen als Störmeldungen an das Empfangsgerät des Verantwortlichen und den Prozessrechner übermittelt werden. So löst erst eine Störung der Produktionseinheit 1 zum Zeitpunkt t6 ein Störsignal in der Störmeldebox 6 gemäß dem mittleren Diagramm aus.

## Patentansprüche

1. Störmeldesystem mit mehreren räumlich verteilt angeordneten Produktionseinheiten, die Mittel zum Generieren und Anzeigen eines Störsignals besitzen, einer Störmeldebox, die zum Empfang von Störsignalen und zur Weitergabe von Störmeldungen ausgebildet ist und einem oder mehreren Empfangsgeräten zum Empfangen und Anzeigen von Störmeldungen, dass mehrere Produktionseinheiten (1) zu mindestens einer Gruppe (I-III) angeordnet sind, dass jeder Produktionseinheit (1) eine Sendeeinheit (3) zur drahtlosen Übermittlung der Störsignale zugeordnet ist, dass die Datenempfangseinheiten (4) mit der Störmeldebox (6) verbunden sind, und dass die Störmeldebox (6) mit einem Prozessrechner (9) verbunden ist, **dadurch gekennzeichnet, dass** jeder Gruppe (I-III) genau eine Datenempfangseinheit (4) zugeordnet ist, und dass die Datenempfangseinheit (4) Mittel (5) zum Anzeigen der Störsignale besitzt.

2. Störmeldesystem nach Anspruch 1, **dadurch gekennzeichnet, dass** die Störmeldebox (6) über eine Netzwerkverbindung (8) mit dem Prozessrechner (9) verbunden ist.

3. Störmeldesystem nach Anspruch 2, **dadurch gekennzeichnet, dass** die Netzwerkverbindung (8) eine LAN-Verbindung ist.

4. Störmeldesystem nach einem der vorhergehenden Ansprüche, **dadurch gekennzeichnet, dass** der Prozessrechner (9) über ein weiteres Netzwerk (11) mit weiteren Rechnern (12) verbunden ist.

5. Störmeldesystem nach einem der vorhergehenden Ansprüche, **dadurch gekennzeichnet, dass** die Störmeldebox (6) eine Datenaufbereitungseinheit (6a) besitzt.

6. Verfahren zur Ausgabe von Störmeldungen von mehreren räumlich verteilt angeordneten Produktionseinheiten, bei dem von den Produktionseinheiten generierte Störsignale einer Störmeldebox zugeführt werden und die Störmeldebox eine Störmeldung einem oder mehreren Empfangsgeräten zum Empfangen und Anzeigen von Störmeldungen zuführt, dass die Produktionseinheiten mindestens eine Gruppe bilden, dass die Datenempfangseinheiten die Störsignale der jeweiligen Gruppe an die Störmeldebox weiterleiten und dass die Störmeldungen von der Störmeldebox zusätzlich einem Prozessrechner zugeführt werden, **dadurch gekennzeichnet, dass** die Störsignale der Produktionseinheiten einer Gruppe genau einer Datenempfangseinheit zugeführt werden, und dass die Störsignale der Produktionseinheiten von der Datenempfangseinheit angezeigt werden.

7. Verfahren nach Anspruch 6, **dadurch gekennzeichnet, dass** die Störsignale der Produktionseinheiten zur Umwandlung in Störmeldungen in der Störmeldebox aufbereitet werden.

8. Verfahren nach Anspruch 7, **dadurch gekennzeichnet, dass** ein Störsignal in der Störmeldebox erst dann in eine Störmeldung umgewandelt wird, wenn es einen vorbestimmten Zeitraum anliegt.

9. Verfahren nach Anspruch 7, **dadurch gekennzeichnet, dass** ein Störsignal in der Störmeldebox erst dann in eine Störmeldung umgewandelt wird, wenn nach dem letzten Anliegen des vorherigen Störsignals ein bestimmter Zeitraum vergangen ist.

10. Verfahren nach einem der vorhergehenden Ansprüche 6 bis 9, **dadurch gekennzeichnet, dass** die Weiterleitung der Störmeldung von der Störmeldebox an dem Prozessrechner und die Empfangsgeräte nach unterschiedlichen Zeiträumen erfolgen.

## Claims

1. Fault message system comprising a number of production units which are arranged spatially distributed and which have means for generating and indicating a fault signal, a fault alarm box which is constructed for receiving fault signals and for forwarding fault messages and one or more receiving devices for receiving and indicating fault messages, wherein a number of production units (1) are arranged to form at least one group (I-III), wherein each production unit (1) is associated with a transmitting unit (3) for the wireless transmission of the fault signals, wherein the data receiving units (4) are connected to the fault alarm box (6) and wherein the fault alarm box (6) is connected to a process computer (9), **characterized in that** each group (I-III) is associated with exactly one data receiving unit (4), and **in that** the data receiving unit (4) has means (5) for indicating the fault signals.

2. Fault message system according to Claim 1, **characterized in that** the fault alarm box (6) is connected to the process computer (9) via a network connection (8).

3. Fault message system according to Claim 2, **characterized in that** the network connection (8) is a LAN connection.

4. Fault message system according to one of the preceding claims, **characterized in that** the process computer (9) is connected to other computers (12) via a further network (11).

5. Fault message system according to one of the preceding claims, **characterized in that** the fault alarm box (6) has a data editing unit (6a).

6. Method for outputting fault messages from a number of production units which are arranged spatially distributed, in which method fault signals generated by the production units are supplied to a fault alarm box and the fault alarm box supplies a fault message to one or more receiving devices for receiving and indicating fault messages, wherein the production units form at least one group, wherein the data receiving units forward the fault signals of the respective group to the fault alarm box and wherein the fault messages are additionally supplied to a process computer from the fault alarm box, **characterized in that** the fault signals of the production units of a group are supplied to exactly one data receiving unit, and **in that** the fault signals of the production units are indicated by the data receiving unit.

7. Method according to Claim 6, **characterized in that** the fault signals of the production units are edited in the fault alarm box for conversion into fault messages.

8. Method according to Claim 7, **characterized in that** a fault signal is only converted into a fault message in the fault alarm box when it is present for a predetermined period of time.

9. Method according to Claim 7, **characterized in that** a fault signal is only converted into a fault message in the fault alarm box when a particular period of time has elapsed since the last presence of the previous fault signal.

10. Method according to one of the preceding Claims 6 to 9, **characterized in that** the forwarding of the fault message from the fault alarm box to the process computer and to the receiving devices takes place after different periods of time.

## Revendications

1. Système de signalisation de dérangements comportant plusieurs unités de production réparties dans l'espace, lesquelles disposent de moyens pour générer et afficher un signal de dérangements, une boîte de signalisation des dérangements, laquelle est conçue pour recevoir des signaux de dérangements et pour retransmettre des messages de dérangements, et un ou plusieurs appareils de réception destinés à recevoir et à afficher des messages de dérangements, où plusieurs unités de production (1) sont groupées pour former au moins un groupe (I - III), où une unité émettrice (3) est affectée à chaque unité de production (1) pour la transmission sans fil des signaux de dérangements, où les unités de réception de données (4) sont reliées à la boite de signalisation des dérangements (6) et où la boîte de signalisation des dérangements (6) est reliée à un ordinateur de processus (9), **caractérisé par le fait que** exactement une unité de réception de données (4) est affectée à chaque groupe (I - III) et que les unités de réception de données (4) ont des moyens (5) permettant d'afficher les signaux de dérangements.

2. Système de signalisation de dérangements selon la revendication 1, **caracterisé par le fait que** la boîte de signalisation des dérangements (6) est reliée à un ordinateur de processus (9) par l'intermédiaire d'une liaison en réseau (8).

3. Système de signalisation de dérangements selon la revendication 2, **caractérisé par le fait que** la liaison en réseau (8) est une liaison LAN (ou en réseau local).

4. Système de signalisation de dérangements selon l'une des revendications précédentes, **caractérisé par le fait que** l'ordinateur de processus (9) est relié à d'autres ordinateurs (12) par l'intermédiaire d'un autre réseau (11).

5. Système de signalisation de dérangements selon l'une des revendications précédentes, **caractérisé par le fait que** la boîte de signalisation des dérangements (6) a une unité de traitement de données (6a).

6. Procédé destiné à éditer des messages de dérangements concernant plusieurs unités de production réparties dans l'espace, au cours duquel des signaux de dérangements générés par les unités de production sont envoyés à une boîte de signalisation des dérangements et la boîte de signalisation des dérangements envoie un message de dérangements à un ou plusieurs appareils de réception destinés à recevoir et à afficher des messages de dérangements, où les unités de production forment au moins un groupe, où les unités de réception de données retransmettent les signaux de dérangements du groupe respectif à la boîte de signalisation des dérangements et où les messages de dérangements de la boîte de signalisation des dérangements sont, en plus, envoyés à un ordinateur de processus, **caractérisé par le fait que** les signaux de dérangements des unités de production d'un groupe sont appliqués à exactement une unité de réception de données et que les signaux de dérangements des unités de production sont affichés par l'unité de réception de données.

7. Procédé selon la revendication 6, **caractérisé par le fait que** les signaux de dérangements des unités de production sont traités dans à boîte de signalisation des dérangements pour les convertir en messages de dérangements.

8. Procédé selon la revendication 7, **caractérisé par le fait qu**'un signal de dérangements n'est converti en un message de dérangements dans la boîte de signalisation des dérangements que lorsqu'il reste appliqué pendant une période de temps donnée.

9. Procédé selon la revendication 7, **caractérisé par le fait qu**'un signal de dérangements n'est converti en un message de dérangements dans la boîte de signalisation des dérangements que lorsqu'une période de temps donnée s'est écoulée depuis l'application du précédent signal de dérangements.

10. Procédé selon l'une des revendications 6 à 9, **caractérisé par le fait que** la retransmission du message de dérangements de la boîte de signalisation des dérangements à l'ordinateur de processus et aux appareils de réception a lieu au cours de périodes de temps différentes.
